# EUROPEAN PATENT SPECIFICATION

(11) **EP 3 216 351 B1**
(45) Date of publication and mention of the grant of the patent: **19.12.2018**
(21) Application number: 17160437.4
(22) Date of filing: 10.03.2017
(51) Int. Cl.: A23G 3/02, A23G 3/20, A23G 7/00, A23G 9/26, A45D 40/16, A61K 8/02, B29C 37/00, B29C 39/36

(54) **DEVICE FOR EXTRACTING STICKS FROM SILICONE MOULDS**
VORRICHTUNG ZUR EXTRAHIERUNG VON STÖCKEN AUS SILIKONFORMEN
DISPOSITIF POUR EXTRAIRE DES BÂTONS DE MOULES EN SILICONE

(30) Priority: 11.03.2016 IT UA20161596
(43) Date of publication of application: 13.09.2017
(73) Proprietor: CMI Engineering S.r.l., 20123 Milano (IT)
(72) Inventor: COMOLI, Franco, 28050 POMBIA (NO) (IT)
(74) Representative: Di Gennaro, Sergio

(56) References cited:
- EP-A1- 1 473 133
- FR-A1- 2 443 324
- JP-A- 2000 290 139

## Description

The present invention relates to a device for extracting sticks from silicone moulds.

For the purposes of the present invention, sticks means crayons of cosmetic or medicinal products, known as "stick", such as e.g. lipsticks, lip glosses or packages of lip balm, etc.

To produce lipsticks or lip balm sticks, carousel forming machines are currently known. On the carousel, or rotary table, of these machines there is fixed and moved a plurality of silicone-material moulds, in themselves known and called in jargon "ogives".

By rotating about a vertical axis, the carousel moves the silicone moulds from a casting station to a stripping station and vice versa.

After the stripping station, the formed crayons are implanted on machines which contain them and which are in the form of a cylinder having a cylindrical base portion adapted to serve as gripping element for the user and a second tapered cylindrical portion inside of which the crayon is contained. Usually, when the stick is sold, such second portion is closed by a cap.

The step of extracting the stick from the mould where it is formed and then cooled is a rather delicate step because the product is not in a solid form such as to allow the easy handling thereof.

The document FR 2 443 324 discloses an elastomeric mould for making sticks having means for demolding the sticks, such means comprising: (a)- a first lower chamber surrounding the lower part of the mould being internally perforated to form a channel to make vacuum in the chamber. (b)- a second upper chamber surrounding the upper portion of the mould being internally perforated to make a channel for injecting a fluid between the mould and the stick. Italian Patent IT1366260 describes a device for extracting poured sticks from moulds in which the mould is deformable and the device has a chamber in which there are means for generating a depression which causes the widening of the mould to detach it from the stick.

Such device has a rigid element for containing the mould which moves between a first containment portion in which it limits the expansion of the mould by keeping a portion of the stick integral with the mould, and a release position in which said element allows the deformation of the mould so as to allow the detachment of the stick and the extraction thereof.

Such rigid containment element is a gripper which comprises three jaws which surround the mould.

The deformation of the mould depends on the position of such gripper jaws. There is a need for the movement of such grippers to be perfectly synchronised in order to obtain a perfect widening of the mould. If there is a misalignment in the position of the jaws, it could generate an unwanted movement of the mould and therefore possible damaging of the stick therein. Moreover, the mechanical compression of the gripper in the long run could damage the mould itself.

It is the object of the present invention to obviate the aforementioned drawbacks by providing a device for extracting sticks from silicone moulds.

One aspect of the present invention relates to a device having the features of appended claim 1.

Further features of the device are the subject of the appended claims.

The advantages achievable with the present invention will be more apparent to the person skilled in the art from the following detailed description of a particular non-limiting example embodiment, illustrated with reference to the following diagrammatical drawings:

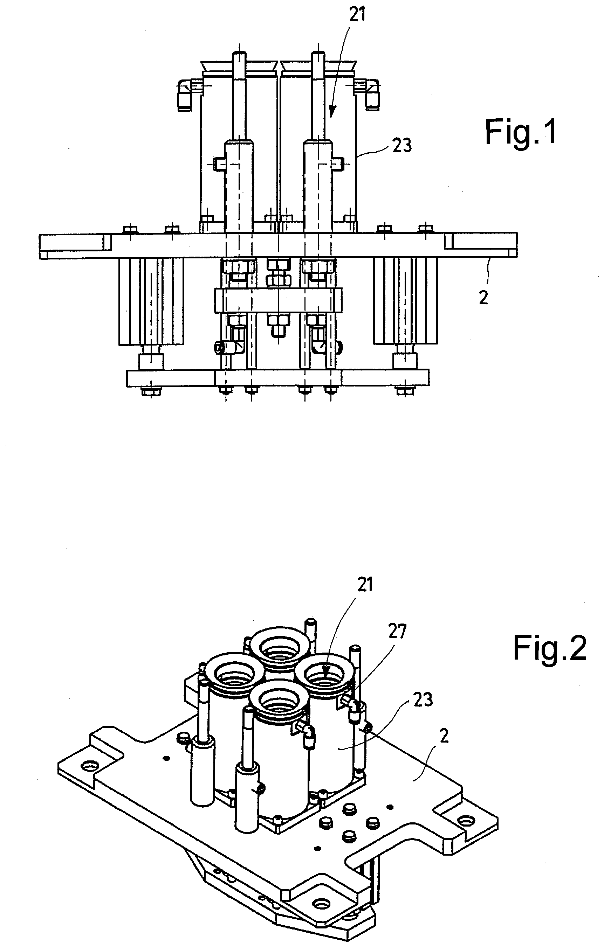

- figure 1 shows a front view of the device according to the present invention;
- figure 2 shows a perspective view of the device according to the present invention;

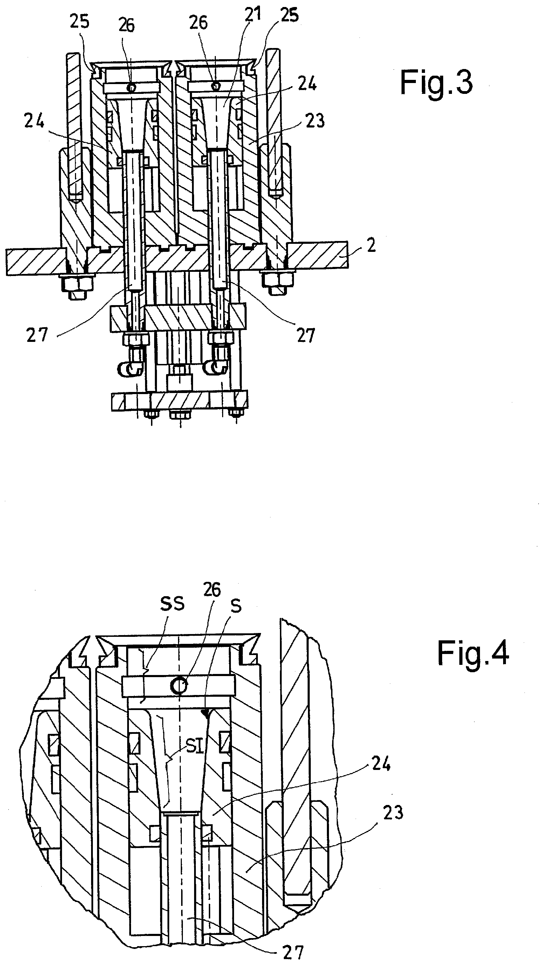

- figure 3 shows a front and sectional view of the device according to the present invention;
- figure 4 is an enlarged detail of the section in figure 3, in which the mould is noted.

With reference to mentioned drawings, the device according to the present invention comprises a lower plate 2 comprising at least one first chamber 21 having size adapted to partially accommodate a mould S.

Such chamber and the mould substantially are frustoconical-shaped.

Such plate usually supports multiple chambers positioned side by side each other and also on multiple rows so as to support moulds organised in groups, and it is capable of moving vertically, bringing the static chambers 21 therewith in the direction of the moulds that are positioned on special supports. Such chambers are each obtained inside a bushing 23 having an inner portion 24 which delimits such chamber, which is slidable vertically with respect to the outer portion 23. Special lip seals adapted to seal the first chamber 21 are present on the upper surface of such bushings.

The size of the chamber 21 is such as not to completely accommodate the mould when the plate is lifted up to the maximum height thereof, thus leaving a second chamber 25 in which an upper part of the mould SS is free to move, while the lower part SI remains in contact with the walls of the first chamber. Preferably, there is a first channel 26 present in proximity to the upper edge of the bushing 23, such first channel being adapted to allow the generation of depression (vacuum) in the second chamber 25 and to allow the widening of such upper portion of the mould. Such bushing and such plate are internally perforated, thus generating a second vertical channel 27 in the direction of the base of the mould where a depression is generated by suitable vacuum generation means in order to keep the base of the mould and the lower part thereof in a position in contact with the walls of the inner bushing 24.

The device operates in the following manner.

The lower plate 2 carrying the first chambers and the bushing is lifted, thus bringing the inner walls of the first chamber in contact with the mould S.

A depression (vacuum) is generated by means of channels 27 and 26, the depression having a dual function: opening the upper portion SS of the mould S and sealing the lower part SI thereof.

The depression generated opens the upper part of the mould, while the lower part remains enclosed by the inner bushing. Said opening allows the cooled stick to free the end part thereof, thus allowing the insertion of the packaging case (container) before the complete extraction thereof.

Once the insertion is complete, the moving part of the bushing slides downwards, thus accordingly freeing the lower part SI of the mould S which, due to the effect of the transfer of the depression (vacuum) generated previously in the first chamber, is opened, thus freeing the stick for the final extraction.

The deformation of the mould occurs by a single depression (vacuum) of the upper chamber, without the need to intervene with successive working cycles, or without mechanical elements causing the movement of the mould which, at times, generate quality-related drawbacks on the surface of the stick.

## Claims

1. Device for extracting sticks from silicone moulds (S) comprising
• a lower plate (2) moving in the direction of the mould to be accommodated comprising at least one first chamber (21) having size suitable for partially accommodating a mould (S), such that a lower portion (SI) of the mould is in contact with the walls of such chamber and an upper portion is free to move into a second chamber (25) when the plate is lifted up to its maximum height,
• such at least one first chamber being obtained inside a bushing (23) having an inner portion (24) which delimits such first chamber (21), slidable with respect to the outer portion between a raised and a lowered position,
• a first channel (26) being present in proximity to the upper edge of the bushing (23), such first channel adapted to allow the generation of depression in the second chamber (25), and to allow the widening of such upper portion of the mould,
• such bushing and such plate being internally perforated to form a second channel (27) in the direction of the base of the mould in which a depression is generated to keep the base of the mould on the base of the chamber (21) and the lower part thereof in a position in contact with the walls of the inner bushing (24),
• such inner portion of the bushing, when it is in a raised position, supports the walls of the lower portion (SI) of the mould and, when it is in a lowered position, it frees the walls of the mould from the walls of the chamber (21).

2. Device according to claim 1, wherein the mould and the chamber have a substantially frustoconical shape.

3. Device according to claim 1, wherein the movable plate (2) supports multiple chambers positioned side by side each other and also on multiple rows so as to support moulds organised in groups and it is capable of moving vertically bringing the static chambers (21) therewith in the direction of the moulds that are positioned on special supports.

4. Device according to claim 1, wherein special lip seals are present on the upper surface of such bushings adapted to seal the first chamber (21).

## Patentansprüche

1. Vorrichtung zum Extrahieren von Stiften aus Siliconformen (S), umfassend
• eine untere Platte (2), die sich in die Richtung der aufzunehmenden Form bewegt, die mindestens eine erste Kammer (21) mit einer geeigneten Größe zur teilweisen Aufnahme einer Form (S) umfasst, so dass ein unterer Teil (SI) der Form die Wände einer solchen Kammer berührt und ein oberer Teil frei ist, um in eine zweite Kammer (25) bewegt zu werden, wenn die Platte auf ihre Maximalhöhe angehoben wird,
• wobei eine solche mindestens eine erste Kammer innerhalb einer Durchführung (23) erhalten wird, die einen Innenabschnitt (24) aufweist, der eine solche erste Kammer (21) begrenzt, der in Bezug auf den Außenabschnitt zwischen einer angehobenen und abgesenkten Position verschiebbar ist,
• einen ersten Kanal (26), der in der Nähe des oberen Rands der Durchführung (23) vorhanden ist, wobei ein solcher erster Kanal ausgelegt ist, das Erzeugen einer Einbuchtung in der zweiten Kammer (25) und das Aufweiten eines solchen oberen Teils der Form zu ermöglichen,
• wobei eine solche Durchführung und eine solche Platte im Inneren perforiert sind, um einen zweiten Kanal (27) in Richtung der Basis der Form zu bilden, in der eine Einbuchtung gebildet ist, um die Basis der Form auf der Basis der Kammer (21) und den unteren Teil davon in einer Position zu halten, in der er die Wände der Innendurchführung (24) berührt,
• wobei ein solcher Innenabschnitt der Durchführung, wenn diese sich in einer angehobenen Position befindet, die Wände des unteren Teils (SI) der Form trägt, und, wenn diese sich in einer abgesenkten Position befindet, die Wände der Form von den Wänden der Kammer (21) freigibt.

2. Vorrichtung nach Anspruch 1, wobei die Form und die Kammer eine im Wesentlichen kegelstumpfförmige Form aufweisen.

3. Vorrichtung nach Anspruch 1, wobei die bewegliche Platte (2) mehrere Kammern trägt, die nebeneinander und auch in mehreren Reihen positioniert sind, um die Formen, die in Gruppen organisiert sind, zu tragen, und die dazu in der Lage ist, sich vertikal zu bewegen, wodurch die statischen Kammern (21) in die Richtung der Formen gebracht werden, die auf Spezialträgern positioniert sind.

4. Vorrichtung nach Anspruch 1, wobei spezielle Lippendichtungen auf der Oberfläche solcher Durchführungen vorhanden sind, die ausgelegt sind, die erste Kammer (21) abzudichten.

## Revendications

1. Dispositif pour extraire des bâtons de moules en silicone (S), comprenant
• une plaque inférieure (2) se déplaçant dans la direction du moule à loger, comprenant au moins une première chambre (21) de taille appropriée pour loger partiellement un moule (S), de sorte qu'une partie inférieure (SI) du moule est en contact avec les parois de ladite chambre et une partie supérieure se déplace librement dans une seconde chambre (25) lorsque la plaque est levée à sa hauteur maximale,
• ladite au moins une première chambre étant obtenue à l'intérieur d'une bague (23), présentant une partie intérieure (24) qui délimite ladite première chambre (21), pouvant coulisser par rapport à la partie extérieure entre une position relevée et une position abaissée,
• un premier canal (26) étant présent à proximité du bord supérieur de la bague (23), ledit premier canal étant apte à permettre la génération de dépression dans la seconde chambre (25), et à permettre l'élargissement de ladite partie supérieure du moule,
• ladite bague et ladite plaque étant perforées à l'intérieur pour former un second canal (27) en direction de la base du moule, dans lequel une dépression est générée pour maintenir la base du moule sur la base de la chambre (21) et sa partie inférieure dans une position en contact avec les parois de la bague intérieure (24),
• ladite partie intérieure de la bague, lorsqu'elle est en position relevée, supporte les parois de la partie inférieure (SI) du moule et, lorsqu'elle est en position abaissée, libère les parois du moule des parois de la chambre (21).

2. Dispositif selon la revendication 1, dans lequel le moule et la chambre présentent une forme sensiblement tronconique.

3. Dispositif selon la revendication 1, dans lequel la plaque mobile (2) supporte plusieurs chambres positionnées côte à côte et également sur plusieurs rangées, de manière à supporter des moules organisés en groupes, et est capable de se déplacer verticalement en amenant avec cela les chambres statiques (21) dans le sens des moules qui sont positionnés sur des supports spéciaux.

4. Dispositif selon la revendication 1, dans lequel des joints à lèvre spéciaux sont présents sur la surface supérieure des dites bagues aptes à sceller la première chambre (21).
